# EUROPÄISCHE PATENTSCHRIFT

(11) **EP 3 853 570 B1**
(45) Veröffentlichungstag und Bekanntmachung des Hinweises auf die Patenterteilung: **26.02.2025**
(21) Anmeldenummer: 19769481.3
(22) Anmeldetag: 16.09.2019
(51) Int. Cl.: G01L 9/00, G01L 19/06, G01L 19/14

(54) **MEMBRAN, DRUCKSENSORSYSTEM UND VERFAHREN ZUR HERSTELLUNG DES DRUCKSENSORSYSTEMS**
MEMBRANE, PRESSURE SENSOR SYSTEM AND METHOD FOR PRODUCING THE PRESSURE SENSOR SYSTEM
MEMBRANE, SYSTÈME DE CAPTEUR DE PRESSION ET PROCÉDÉ POUR LA FABRICATION DU SYSTÈME DE CAPTEUR DE PRESSION

(30) Priorität: 19.09.2018 DE 102018123023
(43) Veröffentlichungstag der Anmeldung: 28.07.2021
(73) Patentinhaber: TDK Electronics AG, 81671 München (DE)
(72) Erfinder: EBERSTEIN, Markus, 10779 Berlin (DE); SÄTTLER, Peter, 10437 Berlin (DE); WOHLGEMUTH, Christian, 12249 Berlin (DE)
(74) Vertreter: Epping - Hermann - Fischer
(86) Internationale Anmeldenummer: PCT/EP2019/074716
(87) Internationale Veröffentlichungsnummer: WO 2020/058197

(56) Entgegenhaltungen:
- DE-A1- 102008 026 611
- DE-A1- 102014 211 856
- US-A1- 2008 060 440
- US-A1- 2012 240 683

## Beschreibung

Die vorliegende Erfindung betrifft eine Membran und ein Drucksensorsystem, das eine Membran aufweist. Ferner betrifft die Erfindung ein Verfahren zur Herstellung des Drucksensorsystems.

Drucksensoren sind weit verbreitete Bauteile für die Messung von Absolut-, Relativ- und Differenzdrücken in einer Vielzahl von technischen Anwendungen. Insbesondere in der Automobilindustrie ist eine exakte Messung von Drücken mittels Drucksensoren unerlässlich. So wird durch die exakte Messung von Differenzdrücken am Abgasstrang von Diesel- und Ottomotoren eine effiziente Abgasreinigung mittels Partikelfiltern erreicht.

Um den stetig steigenden Anforderungen an die Abgasreinigung zu genügen, müssen Differenzdrücke am Abgasstrang so schnell wie möglich, idealerweise direkt nach einem Motorkaltstart gemessen werden. Dies kann insbesondere im Winter zu Problemen führen, da Kondensate, die in einem Abgas enthalten sind, gefrieren können. Gefrorene Kondensate können direkt an druckempfindlichen Membranen des Drucksensors anhaften oder sich in Hinterschneidungen in einer Medienzuleitung des Drucksensors sammeln. Dies kann zur Verfälschung von Messsignalen oder schlimmstenfalls, durch Expansion des Kondensats beim Gefrieren, zur Beschädigung des Drucksensors führen.

Da die druckempfindlichen Membranen in den Drucksensoren dazu dienen, Drücke, die von druckerzeugenden Medien erzeugt werden, zu detektieren und/oder weiterzuleiten, ist es für eine zuverlässige Druckmessung vorteilhaft, wenn die druckempfindlichen Membranen frei von anhaftenden Kondensaten sind.

Um insbesondere die druckempfindlichen Membrane von gefrorenen Kondensaten zu befreien, werden herkömmlicherweise die Drucksensoren an Orten des Motors platziert, wo die gefrorenen Kondensate durch Motorabwärme auftauen können. Da dafür aber eine gewisse Temperatur des Motors notwendig ist, wird eine gewisse Zeit benötigt, um diese Temperatur zu erreichen. Dadurch ist eine Druckmessung am Abgasstrang direkt nach dem Motorkaltstart nicht gewährleistet.

Weiterhin ist es möglich den Drucksensor mittels eines zusätzlichen Heizelelements zu beheizen. Obwohl dadurch gefrorene Kondensate schnell und effizient aufgetaut werden können, widerspricht ein zusätzlicher Energiebedarf, der für ein Beheizen des Drucksensors notwendig ist, dem Gedanken eines energieeffizenten und umweltschonenden Fahrzeugs.

Aufgabe der vorliegenden Erfindung ist daher das Bereitstellen einer Membran, die für die Verwendung in einem Drucksensorsystem geeignet und vorgesehen ist. Des Weiteren ist die Membran unter Bedingungen, die zu einer Bildung von gefrorenen Kondensaten auf der Membran führen können, ohne Wärmezufuhr jeglicher Art, frei von solchen Kondensaten. Weiterhin werden ein Drucksensorsystem, das die Membran aufweist, und ein Verfahren zur Herstellung des Drucksensorsystems angegeben.

In der DE 102014211586 A1 wird ein Drucksensor mit einer hydrophoben Beschichtung in einem drucksensitiven Bereich beschrieben.

In der US 20080060440 A1 wird ein Drucksensor zur Messung eines Verbrennungsdrucks in Verbrennungsmotoren beschrieben, wobei insbesondere eine Anordnung von Membranen beschrieben wird zwischen welchen sich Öl oder Gel befindet um den Drucksensor vom Medium zu beabstanden.

Diese Aufgaben werden durch eine Membran nach Anspruch 1 gelöst. Ein Drucksensorsystem, das eine Membran aufweist und ein Verfahren zur Herstellung des Drucksensorsystems sind weiteren Ansprüchen zu entnehmen.

Es wird eine Membran bereitgestellt, die eine hydrophobe Stelle aufweist.

Als hydrophob soll hier und im Folgenden eine Stelle der Membran bezeichnet werden, bei der nach Aufbringung eines Wassertropfens auf die Stelle ein Kontaktwinkel zwischen dem Wassertropfen und der Stelle von mehr als 90° gemessen wird.

Weiterhin wird ein Drucksensorsystem bereitgestellt, das ein Gehäuse, mindestens eine Medienzuleitung und ein drucksensitives Element umfasst, wobei das drucksensitive Element mindestens eine Membran aufweist.

Des Weiteren wird ein Verfahren zur Herstellung eines Drucksensorsystems, das eine Membran enthält, angegeben. Dieses Verfahren umfasst folgende Schritte:
- Bereitstellen eines Gehäuses, das mindestens eine Medienzuleitung aufweist,
- Bereitstellen eines Sensorkerns,
- Bereitstellen eines inerten Öls,
- Bereitstellen einer Membran,
- Erzeugen einer hydrophoben Stelle auf der Membran,
- Herstellen eines drucksensitiven Elements aus dem Sensorkern, dem inerten Öl und der Membran, die die hydrophobe Stelle aufweist,
- Befestigen des drucksensitiven Elements in dem Gehäuse mittels Klebungen, um ein Drucksensorsystem zu erhalten.

Die Membran kann derart ausgestaltet sein, dass die hydrophobe Stelle eine gesamte Außenfläche der Membran, die direkt in Kontakt mit einem druckerzeugendem Medium, ist. Das druckerzeugende Medium kann beispielsweise ein Abgas eines Otto- oder Dieselmotors sein.

Die hydrophobe Stelle an der Membran verhindert, dass sich Kondensate an selbiger niederschlagen. Da dadurch keine Kondensate an der Membran anhaften, können diese auch nicht an selbiger gefrieren. Dadurch wird ein Entfernen von gefrorenen Kondensaten mittels Beheizen der Membran durch beispielsweise Motorabwärme oder ein zusätzliches Heizelement überflüssig. Dies ermöglicht eine Druckmessung direkt nach dem Motorkaltstart ohne zusätzlichen Energieverbrauch. Weiterhin verhindert die hydrophobe Stelle eine Anhaftung von Verschmutzungen an der Membran, wodurch eine passive Selbstreinigung der Membran ermöglicht wird.

Des Weiteren kann die Membran des drucksensitiven Elements derart ausgestaltet sein, dass die Membran für eine Anwendung in dem Drucksensorsystem in vertikaler Ausrichtung geeignet und vorgesehen ist. Durch die vertikale Ausrichtung der Membran können die Kondensate effektiv von selbiger abfließen. Dies führt dazu, dass Messfehler verringert werden.

Weiterhin kann die Medienzuleitung des Drucksensorsystems eine kritische Fläche aufweisen, die derart ausgebildet ist, dass
- die kritische Fläche mit einer gedachten, horizontalen Hilfsfläche einen Tiefenwinkel β einschließt, für den gilt: 0° < β ≤ 90°,
- und die kritische Fläche keine Hinterschneidungen bildet.

Als kritische Flächen werden hier und im Folgenden Flächen bezeichnet, auf denen sich durch Schwerkrafteinfluss Kondensate sammeln können, die beim Gefrieren dazu führen können, dass das drucksensitive Element des Drucksensorsystems beeinträchtigt oder beschädigt wird.

Durch eine Ausgestaltung der kritischen Fläche derart, dass diese in dem Tiefenwinkel β geneigt ist und keine Hinterschneidungen bildet, kann ein effizentes Abfließen der Kondensate durch Schwerkrafteinfluss erfolgen. Dadurch werden Messfehler und eine Gefahr einer Beschädigung des drucksensitiven Elements durch gefrierende Kondensate verringert.

Des Weiteren kann das drucksensitive Element des Drucksensorsystems mittels Klebungen, die aus einem medienresistenten Klebstoff bestehen, in dem Gehäuse befestigt sein.

Ein medienresistenter Klebstoff ist ein Klebstoff, der seine Eigenschaften, insbesondere seine Haftwirkung, unter Einwirkung des druckerzeugenden Mediums nicht verändert. Dadurch wird gewährleistet, dass sich Klebungen unter der Einwirkung des druckerzeugenden Mediums nicht auflösen. Dies ist insbesondere für die Messung von Differenzdrücken am Abgasstrang von Otto- und Dieselmotoren wichtig, da die Abgase meistens auch aggressive Stoffe wie Säuren enthalten, die ansonsten zu einer Beschädigung der Klebungen führen können.

Durch die Verwendung von Klebungen kann auf andere Befestigungsmittel und Abdichtungen für das drucksensitive Element wie O-Ringe oder Metallstutzen verzichtet werden. Dadurch ist es möglich, das Drucksensorsystem derart auszugestalten, dass die kritische Fläche, die in einem Tiefenwinkel β geneigt ist und keine Hinterschneidungen bildet, direkt in Kontakt mit dem drucksensitiven Element ist. Dies führt dazu, dass keine Flächen in direktem Kontakt mit dem drucksensitiven Element sind, die es ermöglichen, dass sich Kondensate direkt an selbigen sammeln können.

Des Weiteren kann die Membran des Drucksensorsystems einen Durchmesser aufweisen, der ein Durchmesser der Medienzuleitung des Drucksensorsystems ist. Maßgeblich für den Durchmesser der Membran ist der Durchmesser des Teils der Medienzuleitung, der in direktem Kontakt mit dem drucksensitiven Element ist. Dadurch wird es ermöglicht, weitere Bestandteile des drucksensitiven Elements, wie beispielsweise Schweißringe, die als Sammelstellen für Kondensate dienen können, in das Gehäuse des Drucksensorsystems zu integrieren.

Weiterhin kann die Membran des Drucksensorsystems aus einem Membranmaterial bestehen, dass ausgewählt ist aus einer Gruppe umfassend Metalle und Silizium. Insbesondere die Verwendung von Edelstahl als Membranmaterial führt im Vergleich zu anderen Membranmaterialien zu einer Verbesserung einer Beständigkeit des drucksensitiven Elements gegenüber aggressiven Medien wie Säuren.

Ferner kann die hydrophobe Stelle der Membran des Drucksensorsystems aus einer zusätzlichen hydrophoben Schicht, die ein hydrophobes Material enthält, bestehen. Insbesondere kann die zusätzliche hydrophobe Schicht Fluorosilane enthalten.

Gemäß der beanspruchten Erfindung weist die hydrophobe Stelle der Membran des Drucksensorsystems eine Vielzahl von hierarchisch angeordneten mikrometergroßen und submikrometergroßen Einheiten auf, die aus dem Membranmaterial bestehen. Einzelne mikrometergroße Einheiten haben einen Durchmesser von 1 µm bis 5 µm. Einzelne submikrometergroße Einheiten haben einen Durchmesser < 1 µm aufweisen. Der Begriff hierarchisch bedeutet hier, dass auf den mikrometergroßen Einheiten, die direkt auf einer Stelle der erfindungsgemäßen Membran ausgebildet sind, die die hydrophobe Stelle werden soll, eine Vielzahl von submikrometergroßen Einheiten ausgebildet ist. Durch eine Anordnung einer Vielzahl solcher hierarchisch angeordneten mikrometergroßen und submikrometerkgroßen Einheiten wird die hydrophobe Stelle erzeugt, die eine Anhaftung von Kondensaten an die Membran effektiv verhindert. Die hydrophobe Stelle der Membran kann durch Beschichten einer Stelle der Membran, die die hydrophobe Stelle werden soll, mit einer zusätzlichen hydrophoben Schicht, die ein hydrophobes Material enthält, erzeugt werden.

Weiterhin kann die hydrophobe Stelle der Membran durch eine Temperaturbehandlung einer Stelle der Membran, die die hydrophobe Stelle werden soll, erfolgen. Die

Temperaturbehandlung erfolgt dabei in einem Medium, das ausgewählt ist aus einer Menge, die wenigstens Luft, reaktive Gase, reaktive Lösungen und Plasma enthält.

Als reaktiv sollen hier und im Folgenden Gase und Lösungen bezeichnet werden, die dazu geeignet sind, mittels chemischer Reaktionen, eine nicht hydrophobe Stelle der Membran derart zu verändern, dass die Stelle hydrophob wird.

Im Folgenden werden ein drucksensitives Element, das eine Membran mit einer hydrophoben Stelle aufweist und ein Drucksensorelement anhand von schematischen Figuren beschrieben.
Figur 1 zeigt im Querschnitt einen Ausschnitt eines drucksensitiven Elements.
Figur 2 zeigt im Querschnitt ein Drucksensorsystem.

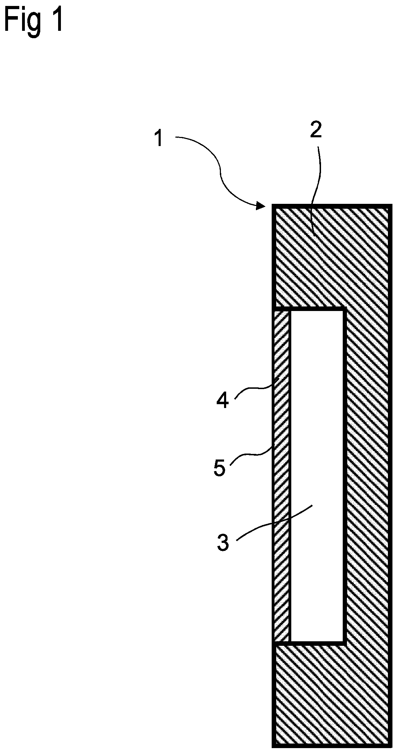

Figur 1 zeigt im Querschnitt einen Ausschnitt eines drucksensitiven Elements 1. Das drucksensitive Element 1 umfasst eine Sensorkern 2, der eine Aussparung 3 aufweist, die mit einer Membran 4 aus Edelstahl bedeckt ist. Der Sensorkern 2 weist alle notwendigen Bauteile, wie ein Messelement und ein Signalwandler, auf, um Drücke, die von einem druckerzeugendem Medium erzeugt werden, in ein normiertes Ausgangssignal umzuwandeln. Weiterhin umfasst der Sensorkern auch Befestigungsmittel für die Membran 4. Die Aussparung 3 des Sensorkernerns 2 ist mit einem inerten Öl gefüllt. Das inerte Öl schützt den Sensorkern 2 vor Beschädigungen durch das druckerzeugende Medium. Drücke, die auf die Membran 4 ausgeübt werden, werden direkt über das inerte Öl, das nicht kompressibel ist, auf das Messelement übertragen. Das Messelement wiederum erzeugt ein Signal, das mittels des Signalwandler in ein normiertes Ausgangssignal umgewandelt wird.

Ferner weist die Membran 4 eine hydrophobe Stelle 5 auf, die auf einer gesamten Außenfläche der Membran 4 ausgebildet ist, die dem druckerzeugendem Medium ausgesetzt ist. Durch das Ausbilden der hydrophoben Stelle 5 auf der Membran 4 wird ein Anhaften von Kondensaten, die in dem druckerzeugendem Medium enthalten sind, an der Membran 4 weitgehend verhindert. Dadurch wird eine Beeinträchtigung oder Zerstörung des drucksensitiven Elements 1 durch die Kondensate, die gefrieren können, effektiv vermieden.

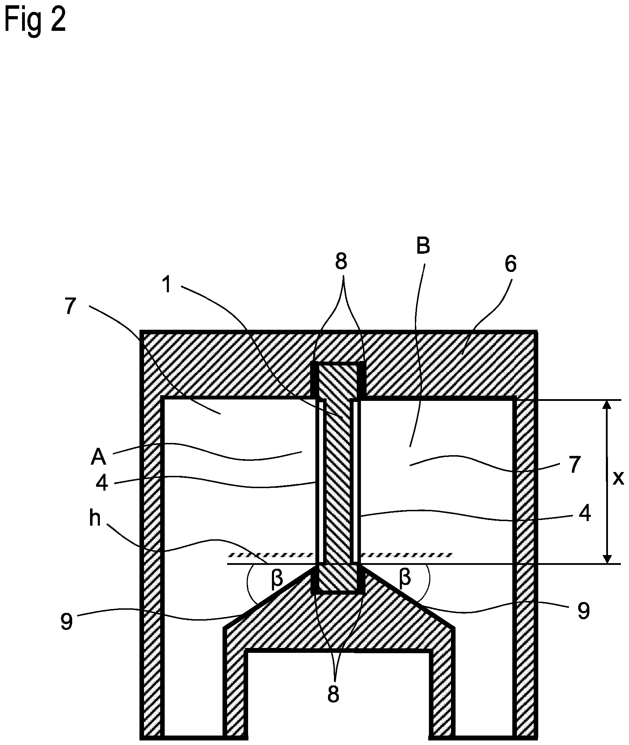

Figur 2 zeigt im Querschnitt ein Drucksensorsystem. Das Drucksensorsystem umfasst ein Gehäuse 6, zwei Medienzuleitungen 7 und ein drucksensitives Element 1, ähnlich dem, wie es in Figur 1 beschrieben ist. Das drucksensitive Element 1 weist zwei Membranen 4 auf, die vertikal ausgerichtet sind und die sich auf zwei gegenüberliegenden Seiten des drucksensitiven Elements 1 befinden. Des Weiteren weisen die beiden Membranen 4 jeweils einen Durchmesser auf, der der Durchmesser x des Teils der Medienzuleitungen 7 ist, der mittels der Klebungen 8 in direktem Kontakt mit dem drucksensitiven Element 1 ist. Dies ermöglicht es weitere Bauteile des drucksensitiven Elements 1 wie Schweißringe in das Gehäuse 6 zu intergrieren, wodurch Flächen, an denen sich Kondensate sammeln können, reduziert werden.

Das drucksensitive Element 1 ist über Klebungen 8 in dem Gehäuse 6 befestigt. Dies ermöglicht einen direkten Kontakt der kritischen Flächen 9 der Medienzuleitungen 7 mit dem drucksensitiven Element 1. Ferner sind die kritischen Flächen 9 derart ausgestaltet, dass sie in einem Tiefenwinkel β, der von der jeweiligen kritischen Fläche 9 und einer horizontalen Hilfsfläche h aufgespannt wird, geneigt sind und keine Hinterschneidungen bilden. Dies in Verbindung mit der vertikalen Ausrichtung der Membran 4 ermöglicht eine effiziente Abführung der Kondensate. Dadurch kann eine Beeinträchtigung oder sogar Beschädigung des drucksensitiven Elements 1 durch die Kondensate, die gefrieren können, weitestgehend verhindert werden.

Der hier gezeigte Aufbau des Drucksensorsystems umfasst eine erste Kammer A und eine zweite Kammer B, die durch das drucksensitive Element 1 voneinander getrennt sind. Dieser Aufbau ermöglicht es Differenzdrücke zu messen. Insbesondere ist es möglich Differenzdrücke am Abgasstrang eines Otto- oder Dieselmotors zu messen. Dabei wird ein Abgasdruck vor Eintritt in einen Partikelfilter, beispielsweise in Kammer A, bestimmt und ein Abgasdruck nach Austritt aus dem Partikelfilter, beispielsweise in Kammer B, bestimmt. Die Differenz aus den beiden Abgasdrücken ergibt den Differenzdruck, der Aussagen über einen Verschmutzungsgrad eines Partikelfilters zulässt.

Weiterhin sind auch Ausführungsformen des Drucksensorsystems möglich, die für die Messung von Relativdrücken und Absolutdrücken geeignet sind.

### Bezugszeichenliste

- 1: drucksensitives Element
- 2: Sensorkern
- 3: Aussparung
- 4: Membran
- 5: hydrophobe Stelle
- 6: Gehäuse
- 7: Medienzuleitung
- 8: Klebung
- 9: kritische Fläche
- A: erste Kammer
- B: zweite Kammer
- h: horizontale Hilfsfläche
- x: Durchmesser des Teils der Medienzuleitung, der in direktem Kontakt mit dem drucksensitiven Element ist

## Patentansprüche

1. Membran (4), die zur Verwendung in einem Drucksensorsystem geeignet und vorgesehen ist, wobei die Membran (4) eine hydrophobe Stelle (5) aufweist, **dadurch gekennzeichnet, dass** die hydrophobe Stelle (5) der Membran (4) eine Vielzahl von hierarchisch angeordneten mikrometergroßen und submikrometergroßen Einheiten aufweist, die aus dem Membranmaterial bestehen, wobei in diesen hierarchisch angeordneten Einheiten auf den mikrometergroßen Einheiten, jeweils eine Vielzahl von submikrometergroßen Einheiten ausgebildet sind, wobei eine einzelne mikrometergroße Einheit einen Durchmesser von 1 µm bis 5 µm aufweist und eine einzelne submikrometergroße Einheit einen Durchmesser < 1 µm aufweist.

2. Drucksensorsystem, umfassend
- ein Gehäuse (6),
- mindestens eine Medienzuleitung (7),
- und ein drucksensitives Element (1), das mindestens eine Membran (4) nach Anspruch 1 aufweist.

3. Drucksensorsystem nach Anspruch 2,
wobei die Membran (4) des drucksensitiven Elements (1) für eine Anwendung in dem Drucksensorsystem in vertikaler Ausrichtung geeignet und vorgesehen ist.

4. Drucksensorsystem nach einem der Ansprüche 2 oder 3, wobei die Medienzuleitung (7) eine kritische Fläche (9) aufweist, die derart ausgebildet ist, dass bei einer Anwendung, in welcher die Membran vertikal ausgerichtet ist,
- die kritische Fläche (9) mit einer horizontalen Hilfsfläche (h) einen Tiefenwinkel β einschließt für den gilt: 0° < β ≤ 90°,
- und die kritische Fläche (9) keine Hinterschneidungen bildet.

5. Drucksensorsystem nach einem der Ansprüche 2 bis 4,
wobei das drucksensitive Element (1) mittels Klebungen (8), die aus einem medienresistenten Klebstoff bestehen, in dem Gehäuse (6) befestigt ist.

6. Drucksensorsystem nach einem der Ansprüche 2 bis 5,
wobei die Membran (4) einen Durchmesser aufweist, der ein Durchmesser (x) des Teils der Medienzuleitung (7) ist, der in direktem Kontakt mit dem drucksensitiven Element (1) ist.

7. Drucksensorsystem nach einem der Ansprüche 2 bis 6,
wobei die Membran (4) aus einem Membranmaterial besteht, das ausgewählt ist aus einer Gruppe, umfassend Metalle und Silizium.

8. Drucksensorsystem nach einem der Ansprüche 2 bis 6, wobei die hydrophobe Stelle (5) der Membran (4) aus einer zusätzlichen hydrophoben Schicht besteht, die ein hydrophobes Material enthält, das ausgewählt ist aus einer Gruppe, umfassend Fluorosilane.

9. Verfahren zu Herstellung eines Drucksensorsystems nach einem der Ansprüche 2 bis 8, umfassend die Schritte:
- Bereitstellen eines Gehäuses (6), das mindestens eine Medienzuleitung (7) aufweist,
- Bereitstellen eines Sensorkerns (2),
- Bereitstellen eines inerten Öls,
- Bereitstellen der Membran (4),
- Erzeugen der hydrophoben Stelle (5) auf der Membran (4),
- Herstellen eines drucksensitiven Elements (1) aus dem Sensorkern (2), dem inerten Öl und der Membran (4), die die hydrophobe Stelle (5) aufweist,
- Befestigen des drucksensitiven Elements (1) in dem Gehäuse (6) mittels Klebungen (8), um ein Drucksensorsystem zu erhalten.

10. Verfahren nach Anspruch 9,
wobei die hydrophobe Stelle (5) der Membran (4) derart erzeugt wird, dass eine nicht hydrophobe Stelle der Membran, die die hydrophobe Stelle (5) werden soll, mit einer zusätzlichen hydrophoben Schicht beschichtet wird.

11. Verfahren nach Anspruch 9,
wobei die hydrophobe Stelle (5) der Membran (4) mittels einer Temperaturbehandlung einer nicht hydrophoben Stelle der Membran (4), die die hydrophobe Stelle werden soll, erzeugt wird, wobei die Temperaturbehandlung in einem Medium durchgeführt wird, das ausgewählt ist aus einer Menge, umfassend Luft, reaktive Gase, reaktive Lösungen und Plasma.

## Claims

1. Membrane (4) which is suitable and provided for use in a pressure sensor system, wherein the membrane (4) has a hydrophobic region (5), **characterized in that** the hydrophobic region (5) of the membrane (4) has a plurality of hierarchically arranged micrometre-sized and submicrometre-sized units consisting of the membrane material, wherein in these hierarchically arranged units a plurality of submicrometre-sized units are in each case formed on the micrometre-sized units, wherein a single micrometre-sized unit has a diameter of 1 µm to 5 µm and a single submicrometre-sized unit has a diameter of < 1 µm.

2. Pressure sensor system, comprising
- a housing (6),
- at least one media supply line (7),
- and a pressure-sensitive element (1) having at least one membrane (4) according to Claim 1.

3. Pressure sensor system according to Claim 2, wherein the membrane (4) of the pressure-sensitive element (1) is suitable and provided for use in a vertical orientation in the pressure sensor system.

4. Pressure sensor system according to either of Claims 2 and 3, wherein the media supply line (7) has a critical surface (9) configured such that, during a use in which the membrane is vertically oriented,
- the critical surface (9) forms together with a horizontal auxiliary surface (h) a depth angle β for which the following holds true: 0° < β ≤ 90°,
- and the critical surface (9) does not form any undercuts.

5. Pressure sensor system according to any of Claims 2 to 4,
wherein the pressure-sensitive element (1) is secured in the housing (6) by means of adhesive bonds (8) consisting of a media-resistant adhesive.

6. Pressure sensor system according to any of Claims 2 to 5,
wherein the membrane (4) has a diameter which is a diameter (x) of that part of the media supply line (7) which is in direct contact with the pressure-sensitive element (1).

7. Pressure sensor system according to any of Claims 2 to 6,
wherein the membrane (4) consists of a membrane material selected from a group comprising metals and silicon.

8. Pressure sensor system according to any of Claims 2 to 6, wherein the hydrophobic region (5) of the membrane (4) consists of an additional hydrophobic layer containing a hydrophobic material selected from a group comprising fluorosilanes.

9. Method for producing a pressure sensor system according to any of Claims 2 to 8, comprising the following steps:
- providing a housing (6) having at least one media supply line (7),
- providing a sensor core (2),
- providing an inert oil,
- providing the membrane (4),
- producing the hydrophobic region (5) on the membrane (4),
- producing a pressure-sensitive element (1) from the sensor core (2), the inert oil and the membrane (4) having the hydrophobic region (5),
- securing the pressure-sensitive element (1) in the housing (6) by means of adhesive bonds (8) in order to obtain a pressure sensor system.

10. Method according to Claim 9,
wherein the hydrophobic region (5) of the membrane (4) is produced in such a way that a non-hydrophobic region of the membrane which is to become the hydrophobic region (5) is coated with an additional hydrophobic layer.

11. Method according to Claim 9,
wherein the hydrophobic region (5) of the membrane (4) is produced by means of a thermal treatment of a non-hydrophobic region of the membrane (4) which is to become the hydrophobic region, wherein the thermal treatment is carried out in a medium selected from a set comprising air, reactive gases, reactive solutions and plasma.

## Revendications

1. Membrane (4), appropriée et prévue pour être utilisée dans un système de capteur de pression, la membrane (4) présentant une partie hydrophobe (5), **caractérisée en ce que** la partie hydrophobe (5) de la membrane (4) présente une pluralité d'unités de taille micrométrique et de taille submicrométrique agencées hiérarchiquement, qui sont constituées du matériau de la membrane, une pluralité d'unités de taille submicrométrique étant formées dans ces unités respectives agencées hiérarchiquement sur les unités de taille micrométrique, une seule unité de taille micrométrique ayant un diamètre de 1µm à 5µm et une seule unité de taille submicrométrique ayant un diamètre < 1µm.

2. Système de capteur de pression, comprenant
- un boîtier (6),
- au moins une conduite (7) d'alimentation en fluide,
- et un élément (1) sensible à la pression comprenant au moins une membrane (4) selon la revendication 1.

3. Système de capteur de pression selon la revendication 2,
dans lequel la membrane (4) de l'élément (1) sensible à la pression est adaptée et prévue pour une utilisation dans le système de capteurs de pression selon une orientation verticale.

4. Système de capteurs de pression selon l'une des revendications 2 ou 3, dans lequel la conduite (7) d'alimentation en fluide présente une surface critique (9) qui est configurée de telle sorte que, dans une application dans laquelle la membrane est orientée verticalement,
- la surface critique (9) comprend, avec une surface auxiliaire horizontale (h), un angle de profondeur β pour lequel s'applique : 0° < β ≤ 90°,
- et de sorte que la surface critique (9) ne forme pas de contre-dépouilles.

5. Système de capteur de pression selon l'une des revendications 2 à 4,
dans lequel l'élément (1) sensible à la pression est fixé dans le boîtier (6) au moyen de collages (8) constitués d'une colle résistante aux fluides.

6. Système de capteur de pression selon l'une des revendications 2 à 5,
dans lequel la membrane (4) a un diamètre qui est un diamètre (x) de la partie de la conduite (7)
d'alimentation en fluide qui est en contact direct avec l'élément (1) sensible à la pression.

7. Système de capteur de pression selon l'une des revendications 2 à 6,
dans lequel la membrane (4) est constituée d'un matériau de membrane choisi dans un groupe comprenant les métaux et le silicium.

8. Système de capteur de pression selon l'une des revendications 2 à 6, dans lequel la partie hydrophobe (5) de la membrane (4) est constituée d'une couche hydrophobe supplémentaire contenant un matériau hydrophobe choisi dans un groupe comprenant les fluorosilanes.

9. Procédé de fabrication d'un système de capteur de pression selon l'une des revendications 2 à 8, comprenant les étapes suivantes :
- fourniture d'un boîtier (6) présentant au moins une conduite (7) d'alimentation en fluide,
- fourniture d'un noyau de capteur (2),
- fourniture d'une huile inerte,
- fourniture de la membrane (4),
- création de la partie hydrophobe (5) sur la membrane (4),
- fabrication d'un élément (1) sensible à la pression à partir du noyau de capteur (2), de l'huile inerte et de la membrane (4), qui présente la partie hydrophobe (5),
- fixation de l'élément (1) sensible à la pression dans le boîtier (6) au moyen de collages (8) afin d'obtenir un système de capteur de pression.

10. Procédé selon la revendication 9,
dans lequel la partie hydrophobe (5) de la membrane (4) est créée en recouvrant d'une couche hydrophobe supplémentaire une partie non hydrophobe de la membrane destinée à devenir la partie hydrophobe (5).

11. Procédé selon la revendication 9,
dans lequel la partie hydrophobe (5) de la membrane (4) est créée au moyen d'un traitement thermique d'une partie non hydrophobe de la membrane (4) qui doit devenir la partie hydrophobe, le traitement thermique étant effectué dans un milieu choisi parmi un ensemble comprenant de l'air, des gaz réactifs, des solutions réactives et du plasma.
